# EUROPÄISCHE PATENTSCHRIFT

(11) **EP 0 753 371 B1**
(45) Veröffentlichungstag und Bekanntmachung des Hinweises auf die Patenterteilung: **27.10.1999**
(21) Anmeldenummer: 96104636.4
(22) Anmeldetag: 23.03.1996
(51) Int. Cl.: B23K 9/067, B23K 9/06

(54) **Verfahren zum Zünden eines Schweisslichtbogens**
Method of igniting a welding arc
Procédé d'allumage d'un arc de soudage

(30) Priorität: 11.07.1995 DE 19525191
(43) Veröffentlichungstag der Anmeldung: 15.01.1997
(73) Patentinhaber: ALCATEL, 75008 Paris (FR)
(72) Erfinder: Klebl, Wolfram, Dipl.-Ing., 30916 Isernhagen (DE); Titze, Günter, 30853 Langenhagen (DE)
(74) Vertreter: Döring, Roger, Dipl.-Ing.

(56) Entgegenhaltungen:
- EP-A- 0 033 312
- DE-A- 2 606 854
- DE-A- 3 523 866
- US-A- 3 646 310
- KEARNS, W.H ET AL: "Welding Handbook, 7th edition, volume 2" 1978 , AMERICAN WELDING SOCIETY , MIAMI, FLORIDA, USA XP002011842 * Seite 95 - Seite 96; Abbildungen 3.11-3.12 *

## Beschreibung

Die Erfindung bezieht sich auf ein Verfahren zum Zünden eines Schweißlichtbogens zwischen einer feststehenden Elektrode und einem zu verschweißenden metallischen Werkstück, bei welchem mittels einer bis in den Schweißbereich ragenden Düse ein denselben abdeckendes Schutzgas zugeführt wird, bei welchem vor dem Einschalten einer den Schweißlichtbogen speisenden Schweißstromquelle im Schweißbereich ein aus einer Hilfsstromquelle gespeister Hilfslichtbogen gezündet wird, durch welchen nach dem Einschalten der Schweißstromquelle der Schweißlichtbogen gezündet wird, und bei welchem zur Zündung des Hilfslichtbogens im Schweißbereich mittels eines hochfrequente Hochspannungsimpulse liefernden Impulsgenerators vor dem Einschalten der Hilfsstromquelle zunächst ein Hochfrequenz-Lichtbogen erzeugt wird ( 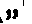 UNIWEMA-Handbuch" der Kabel und Metallwerke Gutehoffnungshütte AG, Ausgabe 4/1975).

Ein solches Verfahren wird beispielsweise zum Verschweißen von Blechen aus Stahl, Kupfer oder Aluminium verwendet. Ein spezielles Einsatzgebiet ist die Herstellung von Rohren, die aus einem längseinlaufenden Metallband geformt werden. Die in Längsrichtung verlaufenden, aneinander stoßenden Kanten eines so geformten Metallbandes werden im Durchlauf nebeneinander verschweißt. Das dadurch erzeugte Rohr kann zur Fortleitung von Fluiden oder auch als Schutzhülle für Kabel verwendet werden. Zum Verschweißen wird eine feststehende, also nicht abbrennende Elektrode eingesetzt. Der Schweißlichtbogen erhitzt die Bandkanten bis zum schmelzflüssigen Zustand. Die wulstfreie Schweißnaht wird also vom Material des Metallbandes selbst gebildet. Der Schweißbereich wird durch ein inertes Schutzgas, wie beispielsweise Argon oder Helium, gegen den Luftsauerstoff abgeschirmt, um Brandlöscher zu vermeiden.

Aus der DE-A-2 606 854 geht eine Schaltungsanordnung zum Zünden eines Lichtbogens für das elektrische Lichtbogenschweißen von Werkstücken mit Dauerelektrode unter Schutzgas hervor. Konzentrisch um die Dauerelektrode herum ist eine als Kreisring ausgebildete Hilfselektrode angeordnet. Mittels eines Hochfrequenz-Zündgeräts wird zunächst ein Hilfslichtbogen zwischen Hilfselektrode und Dauerelektrode gezündet. Nach ausreichender Ionisierung des Schutzgases wird der Hauptlichtbogen durch ein anderes Hochfrequenzzündgerät gezündet.

Die EP-A-0 033 312 beschreibt eine Schutzgasschweißanlage mit automatischen Drahtvorschub. Zum Erwärmen des zu verschweißenden Werkstücks wird zwischen demselben und einer den Schweißdraht umgebenden Düse ein Lichtbogen gezündet. Das geschieht durch Berührung mit dem Werkstück oder durch Hochfrequenzzündung. Nach ausreichender Erwärmung des Werkstücks geht der Lichtbogen schlagartig auf den Schweißdraht über.

Bei dem bekannten Verfahren nach dem erwähnten UNIWEMA-Handbuch wird vor dem Einschalten des Schweißlichtbogens zwischen Elektrode und Düse oder in abgewandelter Form zwischen Elektrode und Werkstück ein Hilfslichtbogen gezündet, der mit geringerer Stromstärke als der Schweißlichtbogen brennt. Durch den Hilfslichtbogen werden die Elektrode und das Werkstück so vorgewärmt, daß beim Einschalten des stromstarken Schweißlichtbogens keine Brandlöcher im Werkstück entstehen. Zur Zündung des Hilfslichtbogens wird der unter Schutzgas liegende Schweißbereich durch hochfrequente Hochspannungsimpulse ionisiert. Diese werden von einem zwischen Elektrode und Werkstück angeschlossenen Impulsgenerator geliefert. Der dadurch erzeugte Hochfrequenz-Lichtbogen wird nach Zündung des Hilfslichtbogens abgeschaltet. Dieses Verfahren hat sich in der Praxis bewährt. Es erfordert jedoch einen wirksamen Schutz der Schweißstromquelle vor den hochfrequenten Hochspannungsimpulsen, wodurch die Bedingungen bei der Zündung des Hilfslichtbogens ungünstig beeinflußt werden können.

Der Erfindung liegt die Aufgabe zugrunde, das eingangs geschilderte Verfahren so weiterzubilden, daß sich stabile Bedingungen für die Zündung des Hilfslichtbogens ergeben.

Diese Aufgabe wird gemäß der Erfindung dadurch gelöst, daß der Hochfrequenz-Lichtbogen zur verbesserten Ionisierung des Schutzgases durch Anschließen des elektrisch von der Schweißstromquelle getrennten Impulsgenerators an die Düse einerseits und das Werkstück andererseits zwischen diesen beiden Teilen erzeugt wird.

Es hat sich überraschend gezeigt, daß durch die Erzeugung eines zwischen Werkstück und Düse brennenden Hochfrequenz-Lichtbogens eine verbesserte Ionisierung des Schutzgases im Schweißbereich erreicht wird. Allein dadurch sind die Bedingungen für die Zündung des Hilfslichtbogens bereits stabilisiert. Hinzu kommt, daß der Impulsgenerator und die Schweißstromquelle bei diesem Verfahren elektrisch getrennt sind, so daß Maßnahmen zum Schutz der Schweißstromquelle gegen die hochfrequenten Hochspannungsimpulse entfallen können. Das führt zu einer weiteren Verbesserung der Ionisierung des Schutzgases und damit zur weiteren Stabilisierung der Zündbedingungen für den Hilfslichtbogen.

Das Verfahren nach der Erfindung wird anhand der Zeichnung als Ausführungsbeispiel erläutert.

Es zeigen:
Fig. 1 schematisch eine Anordnung zur Durchführung des Verfahrens nach der Erfindung.
Fig. 2 und 3 zwei unterschiedliche Schnittbilder eines mit dem Verfahren hergestellten Rohres.

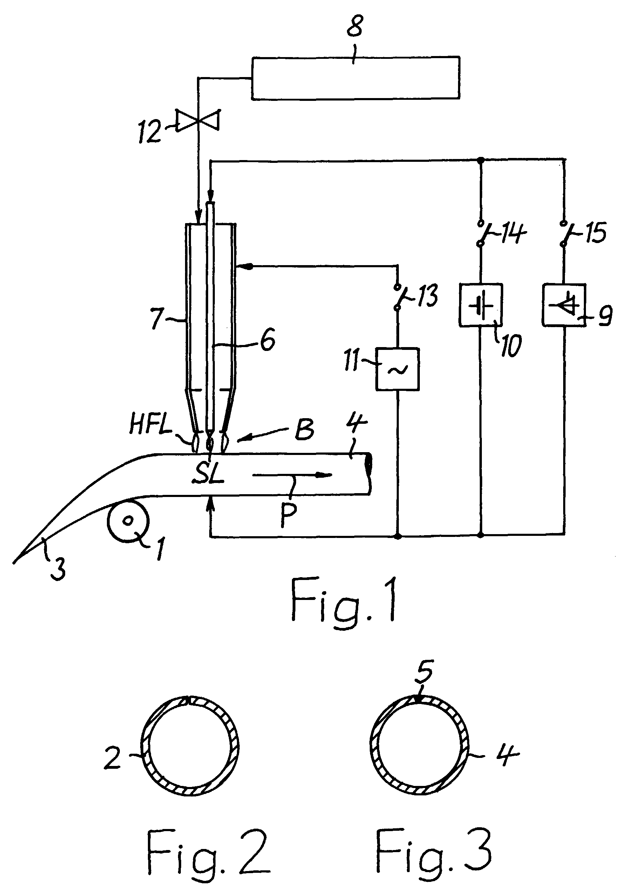

Mit der in der Zeichnung dargestellten Anordnung werden die in Längsrichtung verlaufenden, stumpf aneinander stoßenden Kanten eines mit einem nur schematisch angedeuteten Formwerkzeug 1 zum Schlitzrohr 2 (Fig. 2) geformten Metallbandes 3 im kontinuierlichen Durchlauf miteinander verschweißt. Es ergibt sich dadurch als verschweißtes Werkstück ein geschlossenes Rohr 4 mit einer wulstfreien Schweißnaht 5.

Die Anordnung zum Verschweißen des Metallbands 3 weist eine feststehende, also nicht abbrennende Elektrode 6 auf, die beispielweise aus Wolfram besteht. Die Elektrode 6 ist in einer rohrförmigen, beispielweise aus Stahl, Kupfer oder Messing bestehenden Düse 7 angeordnet, welche an einen mit Gas gefüllten Behälter 8 angeschlossen ist. Zur Anordnung gehören außerdem eine Schweißstromquelle 9, eine Hilfsstromquelle 10 und ein Impulsgenerator 11. Die den Schweißlichtbogen speisende Schweißstromquelle 9 ist ebenso wie die Hilfsstromquelle 10 an die Elektrode 6 und das Metallband 3 bzw. das Rohr 4 angeschlossen. Der Impulsgenerator 11 ist mit der Düse 7 und dem Metallband 3 bzw. dem Rohr 4 verbunden.

Der Behälter 8 enthält ein inertes Gas, beispielweise Argon oder Helium. Der von der Schweißstromquelle 9 gelieferte Strom ist wesentlich höher als der von der Hilfsstromquelle 10 kommende. Der Impulsgenerator 11 liefert hochfrequente Hochspannungsimpulse.

Das Verfahren nach der Erfindung arbeitet beispielweise wie folgt:

Nach Öffnung des Ventils 12 strömt Gas mit einem Druck von beispielsweise 1 Bar und etwa 5 bis 10 Liter pro Minute in die Düse 7. Es umspült die Elektrode 6, insbesondere deren dem Rohr 4 zugewandte Spitze. Das Gas schirmt den ganzen Schweißbereich B an der Spitze der Elektrode 6 und die Oberfläche des Rohres 4 bzw. die zusammengeführten Kanten des Metallbandes 3 gegen den Sauerstoff der Umgebungsluft ab. Mittels des Schalters 13 wird dann der Impulsgenerator 11 eingeschaltet. Durch die von demselben abgegebenen hochfrequenten Hochspannungsimpulse von beispielsweise 6 Volt bei etwa 600 kHz wird das Gas im Schweißbereich B ionisiert. Es wird außerdem ein Hochfrequenz-Lichtbogen HFL zwischen der Düse 7 und dem Rohr 4 erzeugt.

Sobald der Hochfrequenz-Lichtbogen HFL brennt, wird die Hilfsstromquelle 10 mittels des Schalters 14 eingeschaltet. Durch die Ionisierung des Gases und durch den Hochfrequenz-Lichtbogen HFL wird dadurch ein Hilfslichtbogen zwischen der Elektrode 6 und dem Rohr 4 gezündet. Er wird aus der Hilfsstromquelle 10 gespeist und brennt mit relativ geringer Stromstärke von beispielweise 5 bis 7 Ampère, so daß die Elektrode 6 und die zusammengeführten Kanten des Metallbandes 3 nur erwärmt werden. Der Hochfrequenz-Lichtbogen HFL wird dann durch Öffnen des Schalters 13 abgeschaltet.

Zum Verschweißen der Kanten des Metallbandes 3 wird danach mittels des Schalters 15 die Schweißstromquelle 9 eingeschaltet. Der Schweißlichtbogen SL wird dann durch den Hilfslichtbogen gezündet. Er brennt mit einer Stromstärke von beispielsweise 350 Ampére. Sobald der Schweißlichtbogen SL brennt, wird die Hilfsstromquelle 10 abgeschaltet. Gleichzeitig wird das Rohr 4 in Richtung des Pfeiles P gezogen und damit kontinuierlich an der Elektrode 6 vorbeibewegt. Die Vorwärmung von Elektrode 6 und Metallband 3 durch den Hilfslichtbogen stellt sicher, daß beim Einsatz des Schweißlichtbogens SL keine Brandlöcher in der Schweißnaht 5 bzw. im Rohr 4 entstehen.

## Patentansprüche

1. Verfahren zum Zünden eines Schweißlichtbogens zwischen einer feststehenden Elektrode und einem zu verschweißenden metallischen Werkstück, bei welchem mittels einer bis in den Schweißbereich ragenden Düse ein denselben abdeckendes Schutzgas zugeführt wird, bei welchem vor dem Einschalten einer den Schweißlichtbogen speisenden Schweißstromquelle im Schweißbereich ein aus einer Hilfsstromquelle gespeister Hilfslichtbogen gezündet wird, durch welchen nach dem Einschalten der Schweißstromquelle der Schweißlichtbogen gezündet wird, und bei welchem zur Zündung des Hilfslichtbogens im Schweißbereich mittels eines hochfrequente Hochspannungsimpulse liefernden Impulsgenerators vor dem Einschalten der Hilfsstromquelle zunächst ein Hochfrequenz-Lichtbogen erzeugt wird, dadurch gekennzeichnet, daß der Hochfrequenz-Lichtbogen (HFL) zur verbesserten Ionisierung des Schutzgases durch Anschließen des elektrisch von der Schweißstromquelle (9) getrennten Impulsgenerators (11) an die Düse (7) einerseits und das Werkstück andererseits zwischen diesen beiden Teilen erzeugt wird.

## Claims

1. A method for igniting a welding arc between a fixed electrode and a metal workpiece to be welded, by which a covering protective gas is supplied by a nozzle that extends into the welding area, by which prior to switching on a welding power source which supplies the welding arc an auxiliary arc being supplied by an auxiliary power source is ignited in the welding area which is used to ignite the welding arc after switching on the welding power source, and by which prior to switching on the auxiliary power source a high-frequency arc is ignited in the welding area for initially igniting the auxiliary arc, the high-frequency arc being produced by a pulse generator delivering high-frequency high-voltage pulses, characterized in that for improving the ionisation of the protective gas the pulse generator (11) which is separated electrically from the welding power source (9) is connected to the nozzle (7) and the workpiece whereby the high-frequency arc (HFL) is ignited between the nozzle (7) and the workpiece.

## Revendications

1. Procédé d'allumage d'un arc de soudage entre une électrode fixe et une pièce d'usinage métallique à souder, par lequel un gaz de protection est amené en couverture au moyen d'une buse portée jusqu'au champ de soudure, par lequel un arc secondaire, alimenté par une source de courant annexe, est allumé dans le champ de soudure avant de mettre en circuit une source de courant de soudage alimentant l'arc de soudage, par lequel, l'arc de soudage est allumé après la mise en circuit de la source de courant de soudage, et par lequel un arc à haute fréquence est d'abord produit au moyen d'un générateur d'impulsions délivrant des impulsions de haute tension à haute fréquence pour l'allumage de l'arc secondaire dans le champ de soudure avant la mise en circuit de la source de courant annexe, caractérisé par le fait que l'arc à haute fréquence sera produit entre la buse et la pièce d'usinage pour améliorer l'ionisation du gaz de protection, ces deux pièces étant raccordées chacune de leur côté au générateur d'impulsions qui, lui, est séparé électriquement de la source de courant de soudage.
